# EUROPEAN PATENT APPLICATION

(11) **EP 1 312 593 A2**
(43) Date of publication of application: **21.05.2003**
(21) Application number: 02021688.3
(22) Date of filing: 27.09.2002
(51) Int. Cl.: C04B 41/89, B23B 27/14

(54) **Dual coated cubic boron nitride cutting tool and method of employing same**

(30) Priority: 19.11.2001 US 988199
(71) Applicant: Muncie Power Products, Inc., 47305 Muncie, Indiana (US)
(72) Inventor: Whiteis, William David, Sand Springs, Oklahoma 74063 (US)
(74) Representative: Franzolin, Luigi

(57) **Abstract**

Dual-coated cubic-boron-nitride and polycrystalline-cubic-boron-nitride cutting tools (inserts) which exhibit increased durability and performance charactersitics when employed in hard turning processes. In addition, herein are disclosed methods of employing such cutting tools which are capable of producing work pieces with exceptional surface characteristics within tight size tolerances and with increased production efficiency

## Description

### FIELD OF INVENTION

This invention relates to coated cubic boron nitride and polycrystalline cubic boron nitride cutting inserts which exhibit increased durability when employed in hard turning processes. More specifically, this invention relates to a tool constructed of a cubic boron nitride substrate which is coated with a first layer of titanium nitride and a second layer of titanium-aluminum-nitride thereby to exhibit improved wear and performance characteristics. This invention further relates to a method of employing such a cutting tool (insert) which is capable of producing work pieces with exceptional surface characteristics within tight size tolerances and with increased production efficiency.

### BACKGROUND OF INVENTION

In the conventional (non-hard turning) manufacturing process of machining steel into a finished, hardened-steel workpiece, there are typically three major steps. In the first step, the steel workpiece is cut in the non-hardened state, utilizing a lathe employing a carbide tool, to a desired shape and dimensions within certain size tolerances. Secondly, the shaped workpiece must be hardened in a heat treating process to obtain the necessary or desired hardness. Thirdly, because certain types of steel products require specific finishes which a carbide tool is not able to achieve, the workpiece must be ground to the desired finish. Therefore, in the third step of the manufacturing process, the workpiece, after being heat treated and hardened, is passed along to a tool operator who utilizes a grinder on the steel workpiece to obtain a "finish" of acceptable smoothness. An example workpiece which is subjected to such a manufacturing process is a tapered bore gear which is typically comprised of a 62 Rc (Rockwell) steel. A typical smoothness which might be required is a Ra below 8 (conventionally between 2 and 8).

When utilizing such carbide tool cutting techniques which, as stated above, generally require independent shaping and surface finishing steps, the efficiency of the manufacturing process is rather low due both to the fact that 1) carbide inserts exhibit low durability as compared to the dual coated cutting inserts described herein; 2) heat treating is required between the shaping and surface finishing steps which interrupts the manufacturing process, and 2) grinding is required, as a final step, to obtain the desired surface finish.

For example, a typical carbide insert will only be capable of producing 80-250 parts per index (depending on the application). Therefore, after every 80-250 parts produced the lathe will need to be shut down and the carbide insert will have to be re-indexed. In addition, as aforesaid, once the hardened steel workpiece has been cut to the desired shape and dimensions and heat treated, the workpiece must be finished in a grinding process so that the necessary surface finish may be achieved. Because workpieces with complicated shapes require difficult grinder setups and because grinding requires a completely different set of skills and possibly a different machinist, the grinding operation contributes significantly to the manufacturing process of the final product.

Significant improvements have been made in the machining art which substantially reduce the time and effort required to produce certain hardened steel workpieces. In particular, hard-turning processes, as they are called, have been developed which rely on the use of cubic-boron-nitride (CBN) or polycrystalline cubic-boron-nitride (PCBN) cutting tools (inserts). The use of CBN and PCBN in hard turning operations not only achieves the shape and size of the piece as required but produces high surface smoothnesses (i.e. low Ra) which are suitable as a final finish. Therefore, the use of hard turning is capable of effectively eliminating the grinding process in the manufacture of certain hardened steel workpieces, therefore substantially increasing the efficiency of manufacturing operations.

Although, having proved very beneficial to the machining industry, hard turning as a manufacturing process and the tools associated therewith are still a relatively young art. For example, much of the hard turning which is being done in the industry involves much experimentation and known tools and methods are not yet as durable and efficient, respectively, as is possible to achieve.

For example, CBN and PCBN are well suited to known hard turning processes and are thus commonly used for such. However, these materials are typically more expensive than inserts made of other materials (e.g. such as carbide) and therefore contribute a significant expense to the manufacturing cost of a work piece.

Although wear resistant coatings which improve the durability of the CBN and PCBN inserts (thereby decreasing costs) are known in the art, further increased durability of these expensive inserts is, of course, desired.

Furthermore, during the hard turning process, when the cutting surface of the CBN or PCBN insert becomes worn, typical procedure is to stop the lathe operation and "index" or rotate the insert to a non-worn area after which the hard turning process may be recommenced. Once the CBN or PCBN insert has been fully indexed (i.e. all cutting surfaces have been used up), the insert must be removed and replaced with a new, unworn insert. In particular, both the indexing and removal and replacement of CBN or PCBN cutting tools subtract from the efficiency of the manufacturing operation thus increasing the labor costs of producing hard turned, finished work pieces. Therefore, CBN and PCBN inserts which are more durable not only save tool costs, but save significant time and labor costs as well.

In addition to CBN and PCBN cutting tools with high durability, apparatus and method are needed which are capable of producing work pieces within certain size tolerances and, in particular, with certain degrees of surface smoothness. More particularly, some machining applications, such as tapered bore gear production, require that work pieces be produced with surfaces of exceptionally low roughness and within exacting size specifications. It is important, in this regard, that these qualities be achievable on a production or high volume, low cost basis.

In view of the above, it is apparent that there exists a need in the art for tools and methods which achieve the above objectives. It is a purpose of this invention to fulfill these needs in the art, as well as other needs which will become apparent to the skilled artisan once given the following disclosure.

### SUMMARY OF INVENTION

Generally speaking, this invention fulfills the above-described needs in the art by providing: a cutting tool comprising:
a body of a base substrate material comprising at least 90% cubic boron nitride, the body having a wear resistant coating deposited thereon; the coating consisting essentially of:
   a first layer of a nitride of titanium having an average thickness of approximately 1 to 5 microns;
   a second layer of a nitride of titanium having an aluminum content and having an average thickness of approximately 1 to 5 microns.

In another embodiment there is provided: a method of manufacturing a hardened metal work piece comprising:
a) securing a workpiece in a work piece securing means of a lathe;
b) operating the lathe to rotate the work piece at an initial predetermined surface speed;
c) securing a cutting tool in a cutting tool securing means; wherein the cutting tool comprises a cubic boron nitride substrate having a dual coating deposited thereon, wherein the dual coating consists essentially of:
   a first layer of a nitride of titanium having an average thickness of approximately 2 to 5 microns;
   a second layer of a nitride of titanium having an aluminum content and having an average thickness of approximately 2 to 5 microns;
d) engaging the insert against a surface of the workpiece at a predetermined feed rate thereby to abrade material from the workpiece to achieve a desired surface finish and to achieve predetermined dimensional characteristics of the workpiece.

The invention will now be described with respect to certain embodiments thereof as set forth in the accompanying illustrations, wherein:

### IN THE DRAWINGS

FIG. 1 is a three dimensional view of one embodiment of the cutting tool according to the subject invention with certain parts shown in x-ray.

FIG. 2A is a side-plan view of the embodiment of the subject invention illustrated in FIG. 1.

FIG. 2B is a side-plan view of an alternative embodiment of the cutting tool illustrated in FIG. 1 employing a variation in the inventive coating system.

FIG. 3A is a side-plan view of a known lathe employing one embodiment of the cutting tool according to the subject invention shown with the lathe running "wet".

FIG, 3A is a side-plan view of a known lathe employing one embodiment of the cutting tool according to the subject invention shown with the lathe running "dry".

### DETAILED DESCRIPTION OF CERTAIN EMBODIMENTS

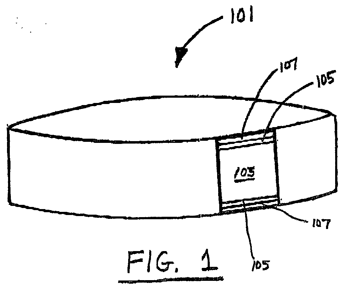

Referring initially to Fig. 1, one exemplar embodiment of the unique insert 101 of the subject invention is illustrated therein. Insert 101, as illlustrated, is comprised of a base substrate material (body) 103 which includes cubic-boron-nitride (hereinafter CBN) or polycrystalline cubic-boron-nitride (hereinafter PCBN). In this regard, the base substrate or body 103 of insert 101, as illustrated, is a conventional 100% CBN insert manufactured by Seco Carboloy (Part Number CBN 100). Such body 103 is generally cylindrical in shape and has a diameter of approximately .250 inches and is commonly used in the manufacture of tapered bore gears, for example.

Although, Seco Carboloy, Part No. CBN 100 is an excellent insert for use as body 103 in the various embodiments of the subject invention, it is conventional, and any other type or brand of insert may be used in the practice of the embodiments herein. In this respect, body 103 is typically comprised of approximately at least 90% CBN or PCBN (used interchangeably herein) and preferably approximately 100% CBN (or PCBN). However, bodies such as Seco Carboloy, Part No. CBN 10 which employ cutting surfaces comprising substantially pure cubic-boron-nitride, but with a core material of carbide, are equally suitable.

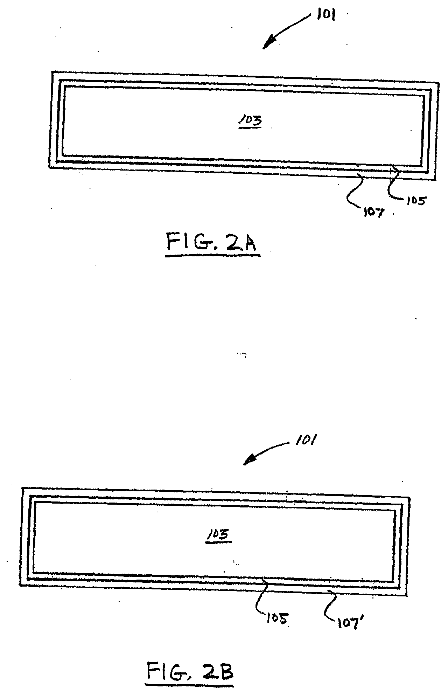

Deposited on top of body 103 and lending insert 101 its unique properties, is a unique dual-coating which provides exceptional durability to the insert as well as the capability of achieving excellent finishes on "turned" work pieces. Specifically, base material or body 103 is coated therewith with a dual-coating of hard metal nitrides. Although various derivatives of the specific coatings which are described herein are contemplated, the inventor has achieved particular success utilizing a combination of layers of titanium-aluminum-nitride and titanium-nitride. For example, Figs. 1 and 2a illustrate a particularly efficacious dual-layer coating wherein the first layer, which is in contact with body 103, is a titanium nitride (TiN) layer 105 approximately 3.5 microns in thickness. The second layer which is deposited on top of layer 105 is a titanium- aluminum-nitride layer 107 also approximately 3.5 microns in thickness. Alternatively, these coatings may be of varying thicknesses such as between 2.5-4.5 microns, or even between 1 and 5 microns. It is to be noted, however, that coatings in the 3 to 4 micron range have proved most advantageous in the experiences of the applicant. Coatings which are appreciably thicker sometimes flake from the substrate and thinner coatings, although durable, do not maximize the effectiveness of the coating scheme.

Although each layer, as shown, was formed by physical vapor deposition, the process by which these layers are achieved is not critical and other processes, such as chemical vapor deposition, may of course be employed. Physical vapor deposition (PVD) is, of course, well known to the skilled artisan and the details of the PVD processes for obtaining the coatings are thus not described herein.

When these coatings are employed on the conventional CBN or PCBN insert as is herein described, dramatic increases in the durability of such coated inserts are thereby achieved. In particular, the number of workpieces or parts per index of an insert which can be produced, while still achieving the desired or better surface characteristics, is markedly improved. These increases in durability are best illustrated by the examples which follow hereinbelow.

In addition to the durability characteristics, however, the coatings provide the additional benefit of imparting a color to the cutting surface of the insert. In particular, the insert which is illustrated in Fig. 2a which includes a first layer of TiN and a second layer on top thereof of TiAlN exhibits a brown color which wears away as the insert becomes worn. Therefore, the problems normally associated with the identification of non-indexed areas of a CBN or PCBN insert are overcome.

For example, a typical CBN insert is black in color throughout its entire thickness. Therefore, when surface area is worn away from the insert, the worn areas remain black in color. Because there is no color contrast between the worn and unworn areas, it is difficult to determine how far to index an insert in order expose a new or fresh cutting surface. With this difficulty, the practitioner in the art is faced with one of two problems. Either he/she must index the insert well past the worn area in order to ensure that a fresh cutting area is exposed, or he/she will occasionally not index an insert far enough and the efficiency of the "hard turning" which is performed therewith will thereby be decreased.

Solving this problem of the prior art as well as solving the other problems described herein (e.g. durability, tolerances, etc.), the coating of Fig. 2a, as aforesaid, exhibits a brownish color which covers the black surface area of the CBN. When this brown coating is worn away from the surface of the CBN insert after the production of a particular number of parts, for example, the black of the CBN insert becomes exposed.

In alternative embodiments, such as illustrated in Fig 2b, TiN layer 105 still comprises the first layer which is in contact with body 103 while a layer of AlTiN 107' is substituted for the layer of TiAIN 107 as the second or top layer. In particular, AlTiN includes a higher aluminum content as compared to TiAlN and results in a coating which exhibits a purple color. While this layer or coating order still achieves the durability and performance characteristics of the insert illustrated in Fig. 2a, purple is not as easily distinguishable from black and therefore is less preferred for its ability to provide wear indicia.

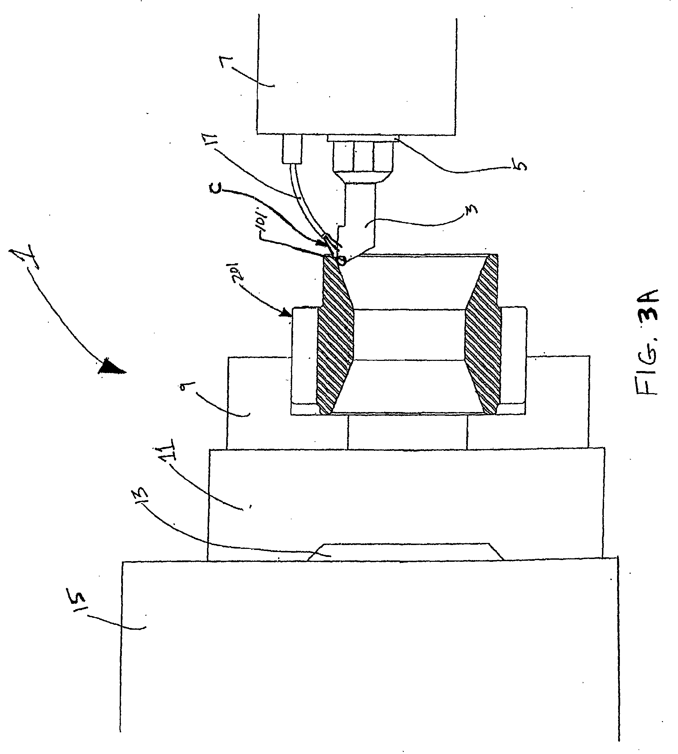

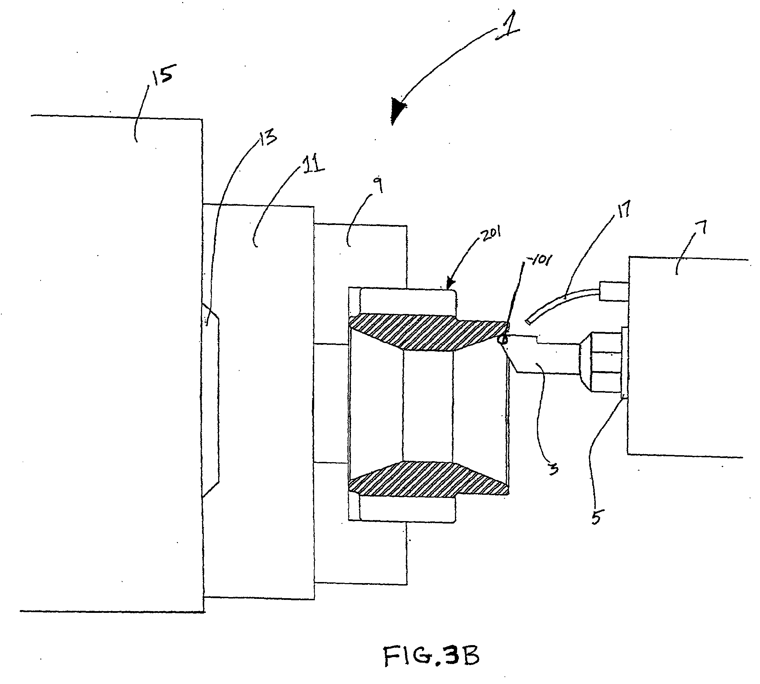

Turning now to Figs. 3A and 3B, there is illustrated a known lathe 1 which is useful in the practice of the hard turning processes of the subject invention. Lathe 1 is conventional in the art and includes, as such, a boring bar 3 for holding the tool inserts (e.g. 101) of the subject invention and a boring bar sleeve 5 for adapting the boring bar to the turret 7. Further included is soft jaw 9 which is conventionally provided for holding a workpiece to be hard turned in a secure and relatively vibration free manner. Soft jaw 9 is held in place by jaw chuck 11 which, in turn, is operationally connected to lathe headstock 15 via spindle nose 13. In Fig. 1, soft jaw 9 is shown holding a tapered bore gear 201 which is to be hard turned via the methods and apparatus of the subject invention.

As has been discovered in the machining art, hard turning is a process which is more demanding than conventional carbide cutting and therefore requires equipment which is more sturdy on average than is otherwise normally required. In this regard, vibration of either the workpiece or the tool insert is detrimental both to the durability of the tool insert and the ability to achieve particular surface characteristics or size tolerances. Therefore, it is important to utilize a lathe which itself is rigid and which has a rigid tool holder to prevent as much vibration as is reasonably possible. In this regard, the exemplar lathe which is illustrated in Fig. 1 herein fulfills these characteristics and may be obtained from Mori-Seiki of Japan as Model No. CL-25. Other models and brand of lathes may, of course, be used to practice the subject invention as long as such models or brands fulfill the requirements stated herein.

Referring again to Figs. 3A and 3B, lathe 1, as stated above, is shown with a workpiece 201 mounted thereon and a double-coated cubic-boron-nitride tool insert mounted in the tool holder boring bar 3 of the lathe turret 7 as is known in the art. Workpiece 201, as aforesaid, is a tapered bore gear, although, other types of work pieces may, of course, be fashioned with the tools and methods of the subject invention.

Because the particular procedure of operating a lathe in a hard-turning manufacturing process is otherwise conventional and well established in the art, each of the specific steps for operating lathe 1 will not be detailed herein However, in brief, a workpiece 201 is first secured in soft jaws 9 of the lathe. Tool 101 is, of course, mounted securely in boring bar 3 and once the lathe is operating at the proper RPMs (which vary according to application due to finish required etc.), the cutting surface of tool 101 is brought to bear against the surface of the workpiece which is to be finished. The speed or RPMs of lathe 1 may be varied at this point depending on the results which are being achieved. In this regard, it is noted that it is common to begin a hard turning process at a particular surface speed/RPM and then increase (or decrease) the speed of the lathe once the turning process is underway. In addition, the feed rate (i.e. the rate at which the workpiece is cut or inches per revolution) which is employed is often adjusted from its initial setting according to the preferences of the lathe operator or simply because a particular feed rate is not producing the characteristics which are desired. Although there are established ranges of lathe operating speeds and feed rates, and noting that is known that hard turning is most efficient at high surface speeds, many of the adjustments of the operating criteria are made according to individual operator preferences or the needs of a particular production run. For these reasons, specific lathe speeds and feed rates are not dictated herein, however, the speeds and rates which are described in the Examples hereinbelow are indicative of conventional operating criteria.

In addition in the variations in the above operating criteria, lathe 1 may be operated either "wet" or "dry". As is conventionally known, these terms refer to whether lathe 1 is operated either with or without a stream of coolant being directed onto the workpiece (e.g. 201) as the workpiece is being machined. Coolant, in this regard, is typically used to reduce the friction between the workpiece and the contact surface of the cutting tool. As such, coolant is typically employed when utilizing carbide cutting inserts. Although coolant proves useful when machining with such inserts, the use of coolant incurs extra expense both in purchasing and disposal costs and in the additional man hours required for coolant disposal. Because of the particular qualities of conventional hard-turning cutting inserts, coolant is not typically required and its use with uncoated CBN and PCBN inserts is therefore conventionally avoided in order to eliminate the aforementioned costs.

However, applicant in his experimentation with coated inserts and various methods of employing such has discovered that the use of coolant when coupled with the unique dual coated inserts of the subject invention, produces exceptional finishes on hardened steel workpieces while simultaneously resulting in production efficiencies which have never before been achieved. Specifically, as seen in Fig 3A, when these "wet" methods are employed, a stream of coolant "C" is simply directed to the area of contact between workpiece 201 and insert 101 via coolant tube 17. In particular, the use of insert 101 while employing coolant "C", as illustrated, results in dramatic increases in the durability of the cutting surface of the cutting tool inserts. Such durability is illustrated best in Examples 1-5 (below) but results in inserts 101 which are capable, in particular, of producing numbers of parts (i.e. hardened steel workpieces) per index on orders of magnitude greater than that which was achievable in the prior art. Because of such durability, substantial tool costs are saved such costs being more than sufficient to offset the additional cost of coolant purchase and disposal.

Although the use of coolant in combination with insert 101 has provided the most advantageous results in the practice of the subject invention, it is, of course, contemplated that novel insert 101 can be employed on a lathe in a "dry" turning process (illustrated in Fig. 3B i.e. with no coolant directed from tube 17). Increased durability and production efficiency will still be achieved when employing insert 101 as such, but not at the particularly high levels obtained when "wet" methods are employed. Coolant purchase and disposal costs are, however, saved.

Following now herein are a series of Examples 1-5 which illustrate the advances of the various embodiments of unique coated insert 101 as well as the particular efficacies of the subject methods of their employment.

### EXAMPLE 1

Double-taper-bore Ford reverse idler gears were hard-turned utilizing lathe Model No. CL-25 manufactured by Mori-Seki of Japan. The cutting insert which was employed was an un-coated, prior art CBN Insert manufactured by Seco-Carboloy as Part No. CBN 10. Such an insert has a pure CBN cutting surface but employs a carbide core (i.e. 90% carbide core with the remaining 10% comprising CBN). The gear was hard turned with the lathe running dry (i.e. with no coolant) at 1,100 RPM and utilizing a feed rate of .0015 inches per revolution (hereinafter IPR) to achieve a depth of cut of .005 inches. The following results were achieved: Parts Per Index: 89; Finish (Ra): 8 or better.

### EXAMPLE 2

Lathe Model No. CL-25 (Mori-Seki) was again utilized to hard-turn double- taper-bore Ford reverse idler gears. For this run, the cutting insert employed was another un-coated, prior art CBN Insert manufactured by Seco-Carboloy (Part No. CBN 100). This insert, however, is 100% cubic boron nitride both at the cutting surface and throughout the core. The lathe was run dry at 1,100 RPM utilizing a feed rate of .0007 IPR to achieve a depth of cut of .005 inches. The following results were achieved: Parts Per Index: 137; Finish (Ra): 8 or better.

### EXAMPLE 3

In a third run, the same model lathe was used once again to hard-turn double- taper-bore Ford reverse idler gears. This time, however, the cutting insert which was employed included a coating deposited thereon. Specifically, Seco-Carboloy insert, Part No. CBN 100, was coated with a single layer of TiN approximately 3.5 microns in thickness. In addition, the lathe was run wet (i.e. with coolant) at 1,200 RPM utilizing a feed rate of .0011 inches per revolution to achieve a depth of cut of .005 inches. Utilizing this coated insert, the following results were achieved: Parts Per Index: 375; Finish (Ra): 5-7 Ra or better.

### EXAMPLE 4

In a fourth production run, which exemplifies the advantageous results which may be achieved by the coatings and methods described herein, a work order to finish (hard-turn) 637 double-taper-bore Ford reverse idler gears was received. In order to produce this work order, the same lathe model number which is described above was employed. The cutting insert which was utilized, however, included the unique dual-coating of the subject invention. Specifically, the insert was a Seco-Carboloy insert, Part No. CBN 100, with a first layer of TiN approximately 3.5 microns thick and a second layer of TiAlN also approximately 3.5 microns thick. The lathe was run wet at 1500 RPM with a feed rate of .0015 IPR to achieve a depth of cut of .005 inches. Utilizing this insert, the entire work order of 637 parts was produced on a single index while maintaining a finish of 8 Ra or better. Furthermore, enough cutting surface remained on the insert to begin a new work order of straight bore gears utilizing the same cutting surface. Results: Parts Per Index: >637; Finish (Ra): 8 or better.

### EXAMPLE 5

In another exemplar production run utilizing a CBN (Seco-Carboloy CBN 100) insert with the same dual-coating employed in Example 4, a work order of straight bore gears (having a 1 inch diameter straight bore were produced). The lathe was again run wet this time at 2,000 RPM utilizing a feed rate of .0021 inches per revolution at the hub face and .0015 IPR at the gear ID to achieve a depth of cut of .005 inches. When employed as such, the dual coated insert exhibited exceptional durability: Results: Parts Per Index: 1634; Finish (Ra): 8-11 Ra.

As may be seen by way of the above Examples, insert 101 and the methods of employing such produce results which are substantially improved over that which has heretofore been known in the art. In particular, apparatus and methods described herein enable one to achieve increased durability of cutting inserts as well as improved efficiency of production runs while simultaneously achieving the desired or necessary surface characteristics (e.g. surface smoothness) which is required for certain applications (i.e. different part types).

Once given the above-disclosure, many other features, modifications, and improvements will become apparent to the skilled artisan. Such other features, modifications, and improvements are therefore considered to be part of this invention, the scope of which is to be determined by the following claims:

## Claims

1. A cutting tool comprising:
a body of a base substrate material comprising at least 90% cubic boron nitride, said body having a wear resistant coating deposited thereon; said coating consisting essentially of:
a first layer of a nitride of titanium having an average thickness of approximately 1 to 5 microns;
a second layer of a nitride of titanium having an aluminum content and having an average thickness of approximately 1 to 5 microns.

2. The cutting tool of claim 1 wherein said first layer consists essentially of titanium nitride.

3. The cutting tool of claim 2 wherein said second layer consists essentially of titanium-aluminum-nitride.

4. The cutting tool of claim 3 wherein said first and said second layers have average thicknesses of approximately 2.5-4.5 microns.

5. The cutting tool of claim 3 wherein said first and said second layers have average thicknesses of approximately 3.25 to 3.75 microns.

6. The cutting tool of claim 3 wherein said base substrate material comprises polycrystalline cubic boron nitride.

7. The cutting tool of claim 4 wherein said wear resistant coating provides visual indicia of the status of the indexed cutting surface.

8. The cutting tool of claim 5 wherein said wear resistant coating provides visual indicia of the status of the indexed cutting surface.

9. A method of manufacturing a hardened metal work piece comprising:
a) securing a workpiece in a work piece securing means of a lathe;
b) operating said lathe to rotate said work piece at an initial predetermined surface speed;
c) securing a cutting tool in a cutting tool securing means; wherein said cutting tool comprises a cubic boron nitride substrate having a dual coating deposited thereon, wherein said dual coating consists essentially of:
a first layer of a nitride of titanium having an average thickness of approximately 2 to 5 microns;
a second layer of a nitride of titanium having an aluminum content and having an average thickness of approximately 2 to 5 microns;
d) engaging said insert against a surface of said workpiece at a predetermined feed rate thereby to abrade material from said workpiece to achieve a desired surface finish and to achieve predetermined dimensional characteristics of said workpiece.

10. The method of claim 9 wherein said method further includes the steps of:
applying a liquid coolant at said surface of said workpiece at the location where said cutting tool is engaged with said workpiece.

11. The method of claim 10 wherein said workpiece is finished within a size tolerance of within +/- .00025 inches and said workpiece has a finish roughness of 1-8 Ra.

12. The method of claim 10 wherein a single index of said cutting tool is capable of producing at least 650 finished workpieces within a size tolerance of within +/.00025 inches and with a finish roughness of between 3 and 8 Ra.

13. The method of claim 12 wherein a single index of said cutting tool is utilized to produce at least 1300 workpieces.

14. The method of claim 12 wherein a single index of said insert is utilized to produce at least 1400 workpieces.

15. The method of claim 13 wherein said predetermined feed rate is between .0009 and .003 inches per revolution.

16. The method of claim 15 wherein said predetermined feed rate is between .0009 and .0019 inches per revolution.

17. The method of claim 10 wherein said predetermined surface speed is at least 350 surface feet per minute.

18. The method of claim 10 wherein said predetermined surface speed is at least 450 surface feet per minute.
